# EUROPÄISCHE PATENTSCHRIFT

(11) **EP 3 444 561 B1**
(45) Veröffentlichungstag und Bekanntmachung des Hinweises auf die Patenterteilung: **29.01.2020**
(21) Anmeldenummer: 18182361.8
(22) Anmeldetag: 09.07.2018
(51) Int. Cl.: G01B 11/27

(54) **VORRICHTUNG ZUR AUSRICHTUNG EINER KALIBRIERTAFEL VOR EINEM FAHRZEUG**
DEVICE FOR ALIGNING A CALIBRATION CHART IN FRONT OF A VEHICLE
DISPOSITIF D'ORIENTATION D'UNE TABLE D'ÉTALONNAGE DEVANT UN VÉHICULE

(30) Priorität: 14.08.2017 DE 102017118454
(43) Veröffentlichungstag der Anmeldung: 20.02.2019
(73) Patentinhaber: WMS Wagner GmbH, 94522 Wallersdorf (DE)
(72) Erfinder: Wagner, Franz, 94522 Wallersdorf (DE)
(74) Vertreter: Gustorf, Gerhard

(56) Entgegenhaltungen:
- DE-A1-102010 062 696
- DE-C1- 19 857 871
- DE-U1-202016 103 584

## Beschreibung

Die Erfindung betrifft eine Vorrichtung geeignet zur Ausrichtung einer Kalibriertafel vor einem Fahrzeug.

Aus DE 10 2004 026 044 B3 sind ein Verfahren und eine Anlage zur Prüfung der Ausrichtung der Strahlungsachse eines Radarsensors an einem Fahrzeug bekannt. Diese dienen zur Abstandsmessung von Fahrzeugen relativ zu einem vorausfahrenden Fahrzeug oder einem in Fahrtrichtung liegenden Hindernis, um die Sicherheit im Straßenverkehr zu erhöhen. Zur exakten Einstellung des Radarsensors sind dort zu beiden Seiten der Hinterachse Referenzlaserquellen angebracht, denen an dem Arm eines Trägers zwei Messskalen entsprechen. Der Träger ist dabei auf einem Messwagen angeordnet, der in zwei unterschiedlichen Abstandspositionen vor dem Fahrzeug angeordnet werden kann, was jedoch den Nachteil hat, dass bei einer Verschiebung immer wieder eine neue Justierung erfolgen muss.

Eine Vorrichtung zur Ausrichtung einer Kalibriertafel ist ebenfalls aus DE 198 57 871 C1 bekannt. Dort ist eine vertikale Säule vorgesehen, an der eine Querstange höhenverstellbar gelagert ist. Diese trägt eine horizontale Führungsschiene mit einem Schlitten, mit dem eine Zielscheibe fest verbunden ist. Um eine Ausrichtung zum Fahrachswinkel der Hinterachse zu erreichen, muss ein die Säule mit der Querstange tragendes Gestell immer wieder neu positioniert werden.

In DE 10 2010 062 696 A1 ist eine Vorrichtung zum Kalibrieren und Justieren eines Umfeldsensors eines Fahrzeugs offenbart, bei der eine Kalibriertafel zur Positionseinstellung auf einer vertikalen Schiene vertikal und horizontal verschiebbar und optional auch verdrehbar ist.

DE 20 2016 103 584 U1 betrifft eine Kalibriereinrichtung mit einer Kalibriertafel, die über zwei Lagerböcke und eine Schieberschiene zwischen zwei Stativen verstellbar ist.

Der Erfindung liegt die Aufgabe zugrunde, eine alternative Einrichtung zur Verfügung zu stellen, die auch bei nicht ebenen Aufstandsflächen einsetzbar ist und bei einer Änderung des Abstands vor dem Fahrzeug keine neue Justierung erfordert, so dass die Ausrichtung zur Kalibriertafel zeitsparend durchgeführt werden kann.

Zur Lösung dieser Aufgabe ist gemäß der Erfindung vorgesehen, dass die rechtwinklig zur Fahrzeuglängsachse ausgerichtete Kalibriertafel an einem Schwenkarm angebracht ist, der auf einer vertikalen Achse um 180° drehbar an dem Träger gelagert ist. Durch eine Halbdrehung um die Schwenkachse wird damit auf einfache Weise der Abstand um die doppelte Länge des Schwenkarms vergrößert, ohne dass eine Neupositionierung der Kalibriertafel erforderlich ist.

Nach einem weiteren Merkmal der Erfindung sind die Kalibriertafel und/oder der Schwenkarm um eine vertikale Gelenkachse arretierbar an dem Schwenkarm bzw. an dem Träger gelagert.

Im Gegensatz zu dem eingangs erläuterten Stand der Technik sind an den Enden des Trägerarms Messlichtquellen, vorzugsweise Laser-Messlichtquellen, angebracht. Deren Strahlrichtung verläuft auch bei geneigter Aufstandsfläche exakt 90° zur Ebene der Kalibriertafel und parallel zur Fahrzeuglängsachse. Während beim Stand der Technik die Strahlrichtung auf Referenzlichtquellen an der Hinterachse trifft, trifft hier die Strahlrichtung auf schwenkbare Reflektoreinheiten an der Hinterachse, die auf einer Seite als Spiegel ausgebildet sind und auf der anderen Seite eine Skalierung tragen. Da die beiden Reflektoreinheiten mit Spiegel und Skalierung in Radnabenmitte der Hinterachse fixiert werden, sind beide relativ zum Sturz der Hinterräder neutral positioniert. Hierbei ist es von besonderem Vorteil, dass die am Fahrzeug anzubringenden Reflektoreinheiten ausschließlich passive Elemente ohne Stromversorgung sind, während die aktiven Elemente (Messlichtquellen, vorzugsweise Laser-Messlichtquellen) nur an dem Träger vor dem Fahrzeug vorgesehen sind, was keine exakt horizontale Aufstandsfläche erfordert.

Die Erfindung ist nachstehend an einem Ausführungsbeispiel erläutert, das in der Zeichnung dargestellt ist. Es zeigen:
Figur 1 die schematische Seitenansicht eines Kraftfahrzeugs, vor dem ein Träger mit einer Kalibriertafel und zwei Laser-Messlichtquellen angeordnet ist, und
Figur 2 in vergrößerter Darstellung die schematische Draufsicht auf ein Fahrzeug mit davor angeordneter Kalibriertafel.

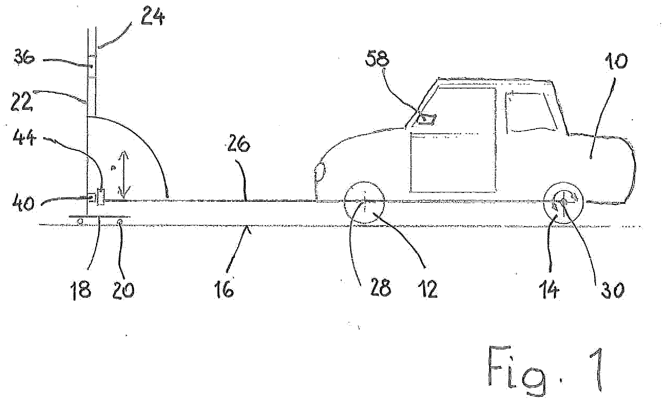

Die Figuren zeigen ein Kraftfahrzeug 10, dessen Vorderräder 12 und Hinterräder 14 auf einer Aufstandsfläche 16 stehen, die horizontal oder auch geneigt oder schräg angeordnet sein kann. Vor dem Fahrzeug 10 befindet sich ein Träger 18, der gemäß Figur 1 auf Rollen 20 verschiebbar ist. Auf dem Träger 18 ist an einem vertikalen Gerüst 22 eine Kalibriertafel 24 angebracht, die genau rechtwinklig zur Verbindungsebene 26 zwischen Vorderachse 28 und Hinterachse 30 des Fahrzeugs 10 ausgerichtet ist.

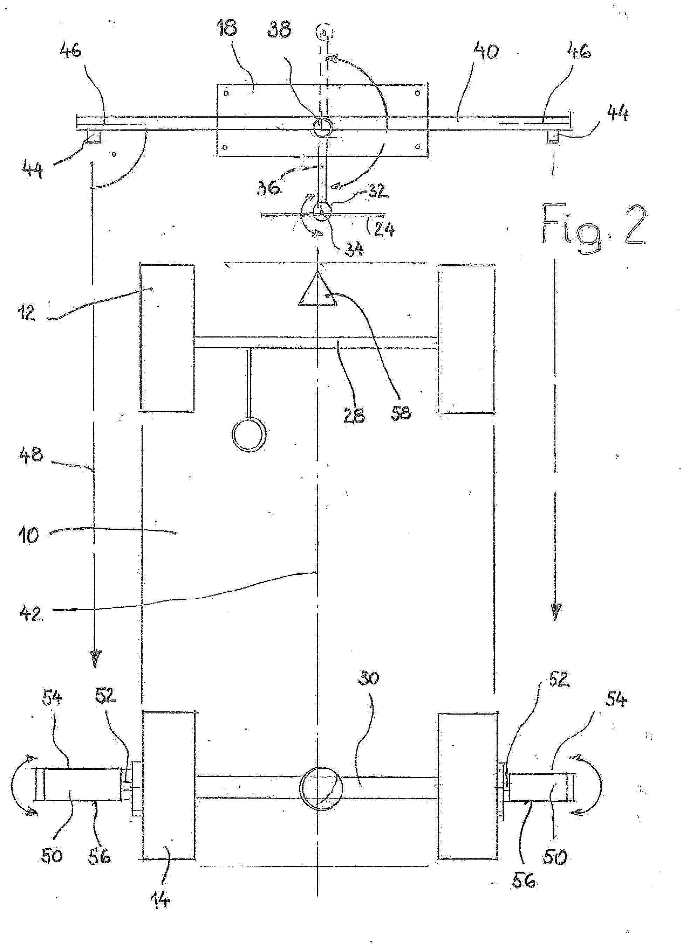

Aus Figur 2 ergibt sich, dass die Kalibriertafel 24 über ein Arretiergelenk 32 mit vertikaler Drehachse 34 an einem Schwenkarm 36 befestigt ist, der seinerseits über ein Arretiergelenk mit vertikaler Schwenkachse 38 an einem horizontalen Arm 40 des Trägers 18 gelagert ist. Durch eine Drehung des Schwenkarms 36 gemäß Doppelpfeil um die vertikale Schwenkachse 38 des Arretiergelenk nach hinten wird, wie Figur 2 weiter zeigt, der Abstand der Kalibriertafel 24 zu dem Arm 40 des Trägers 18 verdoppelt. Auf diese Weise können verschiedene Abstände der Kalibriertafel 24 zum Fahrzeug 10 eingestellt werden, ohne den Träger 18 verschieben zu müssen.

Der Arm 40 des Trägers 18 ist als ein quer zur Fahrzeuglängsachse 42 verlaufender Balken ausgebildet, der an seinen beiden Enden jeweils eine Messlichtquelle (44) trägt, der als Lichtquelle ausgebildet ist und dem eine auf gleicher Höhe angebrachte Skala 46 auf dem Arm 40 des Trägers 18 entspricht.

In Strahlungsrichtung 48 der beiden Messlichtquellen 44 parallel zur Fahrzeuglängsachse 42 befindet an der Hinterachse 38 auf jeder Seite eine Reflektoreinheit 50, die über einen Schraubbolzen 52 exakt zur Radnabenmitte ausgerichtet fixiert werden kann und um die Mittelachse der Hinterachse 30 um 180° verdrehbar ist (s. Pfeil in Figur 1). Jede der beiden Reflektoreinheiten 50 ist auf einer Seite als Skala 54 ausgebildet, der auf der anderen Seite eine reflektierende Fläche (Spiegel 56) entspricht. Dies ist wichtig, weil in unterschiedlicher Höhe angebrachte Reflektoreinheiten 50 mit Spiegel 56 und Skala 54 zu einem Messfehler führen können.

Für die Anwendung der Vorrichtung gemäß der Erfindung wird das Einstellziel, d. h. die Kalibriertafel 24 im vorgeschriebenen Abstand vor dem Fahrzeug 10 platziert. Wenn das Einstellziel in zwei Positionen platziert werden soll, wird die jeweils richtige Schwenkachse 38 des Arretiergelenks verwendet und in der jeweiligen Position eingestellt. Die Kalibriertafel 24 muss nach Maßvorgabe des Fahrzeugherstellers bezüglich der Höhe eines im Fahrzeug 10 angebrachten Abstandssensors 58 (s. unten) in der vorgeschriebenen Höhe eingestellt werden. In Figur 1 ist ferner angedeutet, dass auch der Arm 40, der die beiden Laser-Messlichtquellen 44 trägt, auf die Höhe der Verbindungsebene 26 und damit der Radnabenmitte der Hinterachse 30 eingestellt werden muss.

Zu Beginn der Messung werden die beiden Reflektoreinheiten 50 so gedreht, dass deren Skalen 54 nach vorn weisen, d. h. in Richtung auf die beiden Laser-Messlichtquellen 44, so dass diese auf die Skalen 54 leuchten. Anschließend wird der Arm 40 mit den beiden Messlichtquellen 44 seitlich parallel zur Fahrzeugachse 42 so bewegt, dass beide angezeigten Werte auf den Skalen 54 rechts und links identisch sind.

Anschließend werden die schwenkbaren Reflektoreinheiten 50 um 180° gedreht, so dass nun die Spiegel 56 nach vorn weisen. Dadurch werden die Laserstrahlen (entlang der Strahlungsrichtung 48) reflektiert und treffen auf die Skalen 46 am Tragarm 40. Der Träger 18 wird nun in Fahrzeuglängsrichtung 42 verschoben, bis beide Anzeigewerte auf den Skalen 46 wiederum identisch sind.

Nach der Einstellung in der beschriebenen Weise ist gewährleistet, dass sich die Kalibriertafel 24 in korrekter Position zu dem im Fahrzeug 10 befestigten Abstandssensor 58 befindet und dieser bezüglich der Kalibriertafel 24 justiert werden kann. Vorzugsweise dient als Abstandssensor 58 eine Multifunktionskamera, die in der Mitte der Windschutzscheibe hinter dem Innenrückblickspiegel angebracht ist.

## Patentansprüche

1. Vorrichtung, geeignet zur Ausrichtung einer Kalibriertafel (24) für ein Fahrzeug (10), wobei die Vorrichtung die Kalibriertafel (24) enthält, die verstellbar vor einem Abstandssensor (58) des Fahrzeugs (10) auf einem Träger (18) der Vorrichtung platziert ist, der einen quer zur Fahrzeuglängsachse (42) verlaufenden Arm (40) hat, an dessen beiden Enden eine Messlichtquelle (44) angebracht ist, der eine an der Hinterachse (30) des Fahrzeugs (10) anbringbare Reflektoreinheit (50) der Vorrichtung entspricht, wobei die rechtwinklig zur Fahrzeuglängsachse (42) ausgerichtete Kalibriertafel (24) an einem Schwenkarm (36) angebracht ist, der zur Vermeidung von Neupositionierungen der Kalibiertafel (24) um 180° drehbar auf einer vertikalen Gelenkachse (38) arretierbar an dem Träger (18) gelagert ist.

2. Vorrichtung nach Anspruch 1, **dadurch gekennzeichnet, dass** die Kalibriertafel (24) um eine vertikale Drehachse (34) arretierbar an dem Schwenkarm (36) gelagert ist.

3. Vorrichtung nach einem der vorhergehenden Ansprüche, **dadurch gekennzeichnet, dass** die beiden Messlichtquellen als Laser-Messlichtquellen ausgebildet sind.

4. Vorrichtung nach Anspruch 3, **dadurch gekennzeichnet, dass** die beiden Laser-Messlichtquellen in einer Ebene (26) strahlen, in der die Hinterachse (30) des Fahrzeugs (10) liegt und die rechtwinklig zur Kalibriertafel (24) ausgerichtet ist.

5. Vorrichtung nach Anspruch 3 oder 4, **dadurch gekennzeichnet, dass** den Laser-Messlichtquellen (44) die Reflektoreinheiten (50) gegenüberliegen, die beidseitig an der Radnabenmitte der Hinterachse (30) anbringbar und um diese schwenkbar sind.

6. Vorrichtung nach Anspruch 5, **dadurch gekennzeichnet, dass** die Reflektoreinheiten (50) auf einer Seite als Spiegel (56) ausgebildet sind und auf der anderen Seite eine Skalierung (54) tragen.

7. Vorrichtung nach einem der vorhergehenden Ansprüche, **dadurch gekennzeichnet, dass** als Abstandssensor (58) eine im Fahrzeug (10) angebrachte Multifunktionskamera eingesetzt ist.

## Claims

1. Device suitable for aligning a calibration chart (24) for a vehicle (10), the device comprising said calibration chart (24) which is adjustably positioned on a support (18) of said device in front of a distance detector (58) of said vehicle (10), wherein said support (18) has an arm (40) lying in a direction transverse to the longitudinal axis (42) of the vehicle, on both ends of said arm (40) being mounted a measuring light source (44) to which corresponds a reflector unit (50) adapted to be mounted on the rear axle (30) of the vehicle (10), wherein said calibration chart (24) positioned in a rectangular direction with regard to the longitudinal axis (42) of the vehicle (10) is mounted on a swivel arm (36) to be locked on said support (18) and adapted to be pivoted through 180° on vertical axis (38) in order to avoid re-positioning of said calibration chart (24).

2. Device according to claim 1 wherein said calibration chart (24) is mounted on said swivel arm (36) by means of a vertical axis of revolution (34) adapted to be locked on said swivel arm (36).

3. Device according to claim 1 or 2, wherein both measuring light sources (44) are of the laser type.

4. Device according to claim 3, wherein both laser light sources are emitting their beams in a plane (26) containing the rear axle (30) of the vehicle (10) and rectangularly aligned with the calibration chart (24).

5. Device according to claim 3 or 4, wherein opposite to the measuring laser light sources (44) are positioned said reflector units (50) which are adapted to be fastened on both sides of the center of the wheel hubs of the rear axle (30) through which they may be rotated.

6. Device according to claim 5, wherein said reflector units (50) are provided on one face with a mirror (54) whereas the other face is provided with a graduation pattern (54).

7. Device according to any of the preceding claims, wherein as distance detector (58) a multiple-operation camera is used mounted in the vehicle (10).

## Revendications

1. Dispositif d'orientation d'une table d'étalonnage (24) pour un véhicule (10), le dispositif comprenant ladite table d'étalonnage (24) positionnée de façon déplaçable devant un détecteur de distance (58) du véhicule (50) sur un support (18) du dispositif, ledit support (18) étant muni d'un bras (40) s'étendant transversalement à l'axe longitudinal (42) du véhicule (10) et portant sur les deux extrémités une source lumineuse de mesure (44) à laquelle correspond une unité à réflecteur (50) du dispositif apte à être fixée sur l'essieu arrière (30) du véhicule, ladite table d'étalonnage (24) orientée en sens rectangulaire par rapport à l'axe longitudinal (42) du véhicule étant fixée à un bras pivotant (36) logé sur un axe vertical de rotation (38) orientable sur 180° pour éviter un nouveau positionnement de la table d'étalonnage (24) et apte à être bloqué sur le support (18).

2. Dispositif selon la revendication 1, **caractérisé par le fait que** la table d'étalonnage (24) est portée sur le bras pivotant (36) au moyen d'un pivot vertical (34) et apte à être arrêtée.

3. Dispositif selon la revendication 1 ou 2, **caractérisé par le fait que** les deux sources lumineuses de mesure sont de type à laser.

4. Dispositif selon la revendication 3, **caractérisé par le fait que** les deux sources lumineuses de mesure à laser émettent leur rayonnement dans un plan (26) dans lequel se trouve l'essieu arrière (30) du véhicule (10) et qui est orienté en sens rectangulaire par rapport à la table d'étalonnage (24).

5. Dispositif selon la revendication 3 ou 4, **caractérisé par le fait que** les unités à réflecteur (50) sont opposés aux sources lumineuses de mesure à laser (44) et sont positionnées de façon à pouvoir être montées au centre du moyeu de roue de chaque côte de l'essieu arrière (30) et qu'elles soient aptes à pivoter autour.

6. Dispositif selon la revendication 5, **caractérisé par le fait que** les unités à réflecteur (50) sont munies sur une face d'un miroir (56) et sur l'autre face d'une échelle graduée (54).

7. Dispositif selon une des revendications précédentes, **caractérisé par le fait que** le détecteur de distance (58) est une caméra multifonctionnelle logée dans le véhicule (10).
